# EUROPÄISCHE PATENTSCHRIFT

(11) **EP 3 824 194 B1**
(45) Veröffentlichungstag und Bekanntmachung des Hinweises auf die Patenterteilung: **04.10.2023**
(21) Anmeldenummer: 19737687.4
(22) Anmeldetag: 01.07.2019
(51) Int. Cl.: F16B 5/01, B29C 65/06, B29C 65/00, F16B 13/02, F16B 37/06

(54) **VERBINDUNGSELEMENT UND VERFAHREN ZUM EINBRINGEN EINES VERBINDUNGSELEMENTS**
CONNECTION ELEMENT AND METHOD FOR INTRODUCING A CONNECTION ELEMENT
ÉLÉMENT DE LIAISON ET PROCÉDÉ DE MISE EN PLACE D'UN ÉLÉMENT DE LIAISON

(30) Priorität: 18.07.2018 DE 102018117370
(43) Veröffentlichungstag der Anmeldung: 26.05.2021
(73) Patentinhaber: EJOT SE & Co. KG, 57319 Bad Berleburg (DE)
(72) Erfinder: KITTEL, Dieter, 57334 Bad Laasphe (DE)
(74) Vertreter: DREISS Patentanwälte PartG mbB
(86) Internationale Anmeldenummer: PCT/EP2019/067514
(87) Internationale Veröffentlichungsnummer: WO 2020/015987

(56) Entgegenhaltungen:
- EP-A1- 1 070 858
- EP-A1- 3 330 549
- WO-A1-93/12344
- DE-A1- 2 551 850
- DE-A1-102016 201 795
- FR-A1- 3 054 273
- US-A- 5 437 750
- US-A- 6 153 035

## Beschreibung

Die Erfindung betrifft ein Verbindungselement, insbesondere einen thermischen Stoffschlussdom, zum Einbringen in wenigstens ein Bauteil, insbesondere zum Einbringen in ein Hohlräume aufweisendes, insbesondere plattenförmiges Hohlkammerbauteil, unter Druck- und Rotationsbeaufschlagung, mit einem Grundteil, welcher einen thermoplastischen Kunststoff umfasst, wobei das Verbindungselement eine Längsachse aufweist und zur Rotation um die Längsachse ausgebildet ist, wobei das Verbindungselement eine Oberseite mit einer Werkzeugansetzstelle, sowie eine der Oberseite abgewandte Unterseite aufweist. Die Erfindung betrifft ferner ein Verfahren zum Einbringen eines derartigen Verbindungselements in ein Hohlräume aufweisendes, insbesondere plattenförmiges Hohlkammerbauteil.

Vergleichbare Verbindungselemente sind aus dem Stand der Technik bereits bekannt. So zeigt beispielsweise die DE 10 2014 204 449 A1 ein solches Verbindungselement. Darüber hinaus zeigen die DE 10 2015 208 671 A1, die DE 10 2016 201795 A1, die WO 93/12344 A1 und die FR 16 56896 A1 ebenfalls ein Verbindungselement mit Merkmalen des Oberbegriffs des Anspruchs 1. Aus der DE 2551 8540 ist ein Verfahren zum Verschweißen von Thermoplastkörpern bekannt bei dem zum Überbrücken von durch ungenaue Passungen bedingten Zwischenräumen ein Treibmittel in der Schweißzone vorhanden ist, das bei der Schweißtemperatur einen Gasdruck erzeugt. Insbesondere im Flugzeugbau werden solche Verbindungselemente verwendet, um diese in eines oder mehrere Hohlkammerbauteile einzubringen. Beim gleichzeitigen Einbringen in mehrere Hohlkammerbauteile kann eine Verbindung der Hohlkammerbauteile miteinander bereitgestellt werden. Beim Einbringen in ein einzelnes Hohlkammerbauteil können am Verbindungselement angeordnete Funktionselemente am Hohlkammerbauteil befestigt werden. So sind bspw. Verbindungselemente mit einer Art Mittendurchlass bekannt, welcher bei in das Hohlkammerbauteil eingebrachtem Verbindungselement zur Durchführung von Kabeln oder Ähnlichem genutzt werden kann.

Die Hohlkammerbauteile umfassen dabei üblicherweise eine Grundschicht, eine Deckschicht, sowie eine zwischen Grundschicht und Deckschicht angeordnete Wabenstruktur. Die Grundschicht und die Deckschicht sind vorteilhafterweise aus in Epoxidharz getränkten Glasfasermatten hergestellt, wobei die Wabenstruktur aus in Phenolharz getränkten Aramidfasern oder Papier hergestellt ist.

Beim Einbringen von aus dem Stand der Technik bekannten Verbindungselementen hat sich gezeigt, dass deren Befestigung in den Hohlkammerbauteilen teilweise nicht ausreichend ist, so dass sich die Verbindungselemente wieder aus Hohlkammerbauteilen gelöst haben. Gerade im Flugzeugbau ist jedoch eine dauerhaft sichere Befestigung von Verbindungselementen unumgänglich. Andererseits ist aufgrund der oftmals großen Zahl von Verbindungen im Flugzeugbau ein kostengünstiges Verbindungselement gefordert.

Der Erfindung liegt daher die Aufgabe zugrunde, ein Verbindungselement zum Einbringen in Hohlkammerbauteile bereitzustellen, welches dauerhaft sicher in Hohlkammerbauteilen befestigt werden kann, wobei das Verbindungselement kostengünstig herstellbar sein soll.

Diese Aufgabe wird durch ein Verbindungselement mit den Merkmalen des Anspruchs 1 gelöst. Ein derartiges Verbindungselement zeichnet sich dadurch aus, dass das Verbindungselement an einer sich zwischen der Oberseite und der Unterseite erstreckenden Umfangsfläche am Grundteil einen Expandierabschnitt aus einem thermisch aktivierbaren, expandierfähigen Material aufweist.

Vorteilhafterweise ist das Verbindungselement im Wesentlichen rotationssymmetrisch ausgebildet und weist im Grundteil im Bereich an der Oberseite eine Werkzeugansetzstelle zur Übertragung eines Drehmoments auf. Somit kann ermöglicht werden, das Verbindungselement zum Einbringen in ein Hohlkammerbauteil mit einer Axialkraft in Richtung der Längsachse zu beaufschlagen und gleichzeitig rotierend um die Längsachse anzutreiben.

Beim Einbringen in ein Hohlkammerbauteil kann sich das thermisch aktivierbare, expandierfähige Material des Expandierabschnitts aufgrund von durch Reibung zwischen dem Verbindungselement und dem Hohlkammerbauteil erzeugter Wärme in Hohlräume der Wabenstruktur des Hohlkammerbauteils ausdehnen, so dass unterhalb der Deckschicht des Hohlkammerbauteils ein zusätzlicher Hinterschnitt erzeugt werden kann, durch den das Verbindungselement sicher im Hohlkammerbauteil befestigt werden kann.

Eine erste vorteilhafte Weiterbildung des Verbindungselements sieht vor, dass im Grundteil eine Nut vorgesehen ist, in welcher der Expandierabschnitt angeordnet ist. Als besonders bevorzugt hat es sich dabei erwiesen, wenn die Nut umlaufend ist. Dabei ist es denkbar, dass die Nut eine Rechtecknut ist oder einen halbrunden Querschnitt aufweist. Selbstverständlich ist jeder andere Nutquerschnitt denkbar, welcher fertigungstechnisch einfach herstellbar ist. Es hat sich ferner als vorteilhaft erwiesen, wenn die Oberfläche des Expandierabschnitts im Auslieferungszustand bündig mit einer Umfangsoberfläche des Grundteils ist. Vorteilhafterweise ist die Nut in Richtung der Längsachse im oberen Drittel oder oberen Viertel, d.h. im Drittel oder Viertel, das der Oberseite zugewandt ist, angeordnet, so dass der durch das expandierfähige Material herstellbare Hinterschnitt im Bereich einer Deckschicht eines Hohlkammerbauteils eingebracht werden kann.

Gemäß einer besonders bevorzugten Ausgestaltung des Verbindungselements ist vorgesehen, dass das thermisch aktivierbare Material ein thermoplastischer Kunststoff ist, der ein insbesondere thermisch aktivierbares Treibmittel umfasst. Dabei ist es denkbar, dass das Treibmittel bei Erhitzung sublimiert.

Vorteilhafterweise ist das thermisch aktivierbare, expandierfähige Material zur Ausdehnung unter Wärmeeinwirkung ausgebildet. Somit kann sich das thermisch aktivierbare, expandierfähige Material aufgrund der beim Einbringen in ein Hohlkammerbauteil erzeugten Reibungswärme in Hohlräume des Hohlkammerbauteils ausdehnen.

Weiterhin ist es vorteilhaft, wenn eine metallische Hülse vorgesehen ist, die im Grundteil und konzentrisch zur Längsachse angeordnet ist. Vorteilhafterweise weist die Hülse eine kreiszylindrische Öffnung bzw. Bohrung auf, so dass bei in ein Bauteil bzw. Hohlkammerbauteil eingebrachtem Verbindungselement Kabel durch die Öffnung bzw. Bohrung hindurchgeführt werden können. Vorteilhafterweise weist das Verbindungselement dabei in Richtung der Längsachse eine Länge auf, die derart gewählt ist, dass ein in ein Hohlkammerbauteil eingebrachtes Verbindungselement das Hohlkammerbauteil vollständig durchdringt. Da es beim Einbringen des Verbindungselements in ein Hohlkammerbauteil zum teilweisen Aufschmelzen des Verbindungselements kommt, kann vorgesehen sein, dass die ursprüngliche Länge des Verbindungselements in etwa 30 % größer ist als die Dicke des Hohlkammerbauteils.

Vorteilhafterweise ist die metallische Hülse aus Aluminium oder Edelstahl hergestellt.

Eine weitere, besonders vorteilhafte Weiterbildung des Verbindungselements zeichnet sich dadurch aus, dass die metallische Hülse eine plasmabehandelte Oberfläche aufweist und mit dem thermoplastischen Kunststoff des Grundteils zumindest teilweise umspritzt ist. Besonders bevorzugt ist es dabei, wenn die Oberfläche der Hülse plasmanitriert ist. Somit kann die Anhaftung des thermoplastischen Kunststoffs an der metallischen Hülse verbessert werden. Alternativ oder auch ergänzend dazu ist denkbar, dass die Hülse einen nicht kreiszylindrischen Bereich aufweist, welcher die Hülse im thermoplastischen Kunststoff gegen Verdrehen sichert, bspw. einen Vierkant- oder Sechskantkopf. Es ist jedoch auch denkbar, dass an der Oberfläche der Hülse ein Rändel, eine Verrippung und/oder Verrillung vorgesehen ist. Das Einbringen von Rippen, Rillen oder eines Rändels, sowie die Verwendung eines Vierkant- oder Sechskantkopfes führt jedoch aufgrund der notwendigen Wandstärken der Hülse, sowie der Dimensionen des Vierkant- oder Sechskantkopfs zu insgesamt vergleichsweise großen Verbindungselementen. Eine Plasmabehandlung der Oberfläche hat sich folglich als besonders vorteilhaft erwiesen, da metallische Hülsen mit vergleichsweise dünner Wandstärke verwendet werden können.

Vorteilhafterweise ist die metallische Hülse im Bereich der Unterseite vom Grundteil verschlossen oder der Grundteil weist im Bereich der Unterseite eine konzentrisch zur Längsachse des Verbindungselements angeordnete Öffnung auf. Wenn die metallische Hülse im Bereich der Unterseite vom Grundteil verschlossen ist, hat es sich als vorteilhaft erwiesen, wenn die Unterseite des Grundteils beim Einbringen in ein Hohlkammerbauteil von einem Werkzeug, insbesondere von dem das Verbindungselement antreibenden Werkzeug durchstoßen wird, so dass eine das Verbindungselement entlang der Längsachse von der Oberseite zur Unterseite durchsetzende Öffnung erzeugt wird. Entsprechend können durch die metallische Hülse eines in ein Hohlkammerbauteil eingebrachten Verbindungselements Kabel hindurchgeführt werden.

Weiterhin ist es vorteilhaft, wenn der thermoplastische Kunststoff des Grundteils Polyamid oder Polypropylen ist. Dabei ist es ist denkbar, dass der Grundteil vollständig aus dem thermoplastischen Kunststoff besteht. Es ist jedoch auch denkbar, dass der Grundteil aus thermoplastischem Kunststoff zusammen mit einem entsprechenden Anteil an Glasfasern besteht. Vorteilhafterweise ist der thermoplastische Kunststoff Polyamid 6, Polyamid 66 oder Polyamid 666.

Gemäß einer weiteren, besonders vorteilhaften Weiterbildung des Verbindungselements ist vorgesehen, dass das Verbindungselement an einem Übergangsbereich zwischen der Unterseite und der Umfangsfläche einen Radius im Bereich von 1 mm bis 2 mm aufweist. Ein derartiger Radius hat sich aus prozesstechnischen Gründen als besonders vorteilhaft erwiesen.

Die eingangs genannte Aufgabe wird ferner gelöst durch ein Verfahren mit den Merkmalen des Anspruchs 11 zum Einbringen eines Verbindungselements nach einem der Ansprüche 1 bis 10 in ein Hohlräume aufweisendes, insbesondere plattenförmiges Hohlkammerbauteil. Das Verfahren ist gekennzeichnet durch rotierendes Antreiben des Verbindungselements um dessen Längsachse und Aufbringen einer Axialkraft entlang der Längsachse des Verbindungselements in Richtung des Hohlkammerbauteils mittels eines Werkzeugs, so dass sich das thermisch aktivierbare, expandierfähige Material aufgrund von durch Reibung zwischen dem Verbindungselement und dem Hohlkammerbauteil erzeugter Wärme, insbesondere in Hohlräume des Hohlkammerbauteils, ausdehnt. Ein Vorlochen des Hohlkammerbauteils kann dabei vermieden werden.

Eine erste vorteilhafte Weiterbildung des Verfahrens sieht vor, dass das Verbindungselement derart in das Hohlkammerbauteil eingebracht wird, dass es das Hohlkammerbauteil nach dem Einbringen in Richtung der Längsachse des Verbindungselements vollständig durchdringt.

Als besonders bevorzugt hat es sich dabei erwiesen, wenn das Verbindungselement eine metallische Hülse aufweist, die im Grundteil und konzentrisch zur Längsachse angeordnet ist, wobei Kabel nach dem Einbringen durch die Hülse hindurchgeführt werden. Somit können Kabel durch das Hohlkammerbauteil hindurchgeführt werden. Wenn ein Verbindungselement verwendet wird, bei dem die metallische Hülse im Bereich der Unterseite vom Grundteil verschlossen ist, ist vorteilhafterweise vorgesehen, dass der Grundteil beim Einbringen des Verbindungselements im Bereich der Unterseite des Verbindungselements durch das Werkzeug derart durchstoßen wird, dass eine das Verbindungselement entlang der Längsachse von der Oberseite zur Unterseite durchsetzende Öffnung erzeugt wird.

Weiterhin ist es vorteilhaft, wenn das Verbindungsmittel durch das Werkzeug mit einer Axialkraft im Bereich von etwa 800 N bis etwa 1.200 N, vorzugsweise von etwa 1.000 N beaufschlagt wird.

Vorteilhafterweise wird das Verbindungsmittel durch das Werkzeug mit einer Rotationsgeschwindigkeit im Bereich von etwa 4.000 U/min bis etwa 6.000 U/min, vorzugsweise von etwa 5.000 U/min angetrieben wird.

Weitere Einzelheiten und vorteilhafte Weiterbildungen sind der nachfolgenden Beschreibung zu entnehmen, anhand derer verschiedene Ausführungsformen der Erfindung näher beschrieben und erläutert sind.

Es zeigen:
- Figur 1: einen Schnitt durch eine erste Ausführungsform eines erfindungsgemäßen Verbindungselements entlang der Linie A-A gemäß Figur 5;
- Figur 2: einen Schnitt durch eine zweite Ausführungsform eines erfindungsgemäßen Verbindungselements entlang der Linie A-A gemäß Figur 5;
- Figur 3: einen Schnitt durch eine dritte Ausführungsform eines erfindungsgemäßen Verbindungselements entlang der Linie A-A gemäß Figur 5;
- Figur 4: einen Schnitt durch eine vierte Ausführungsform eines erfindungsgemäßen Verbindungselements entlang der Linie A-A gemäß Figur 5;
- Figur 5: eine Draufsicht auf ein erfindungsgemäßes Verbindungselement gemäß der Figuren 1 bis 4; und
- Figur 6: eine schematische Darstellung beim Einbringen eines Verbindungselements nach dem Stand der Technik in ein Hohlkammerbauteil.

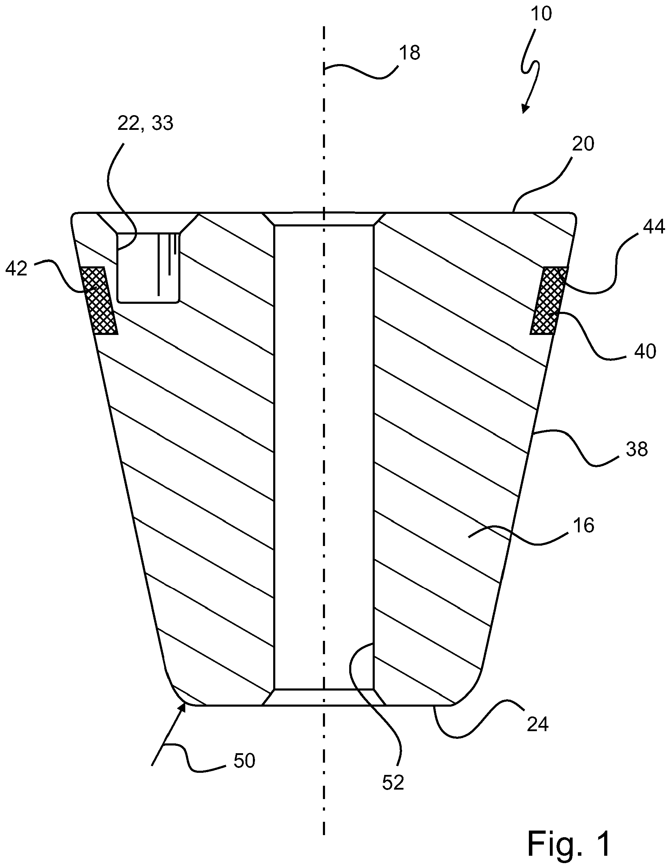

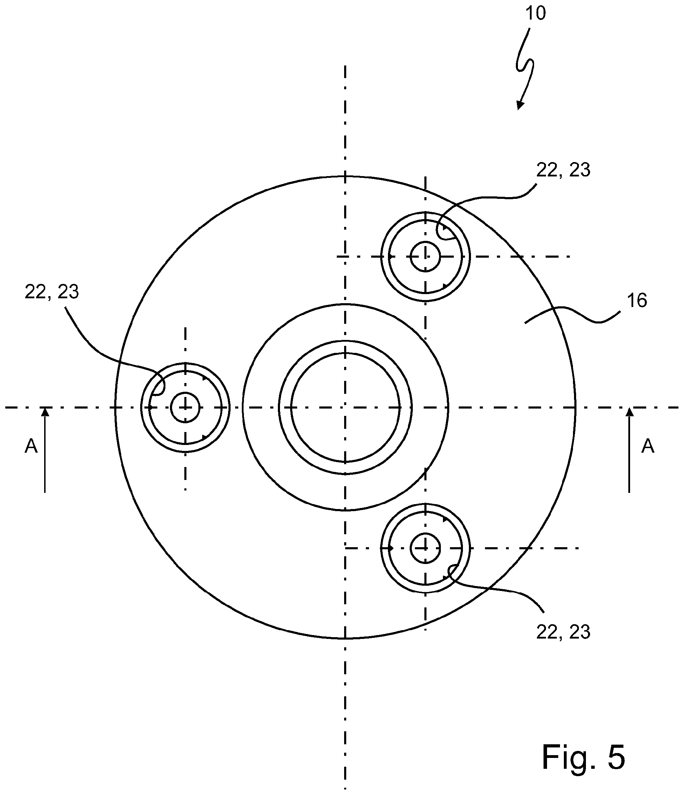

In den Figuren 1 bis 4 sind verschiedene Ausführungsformen eines erfindungsgemäßen Verbindungselements 10 im Schnitt entlang der Linie A-A gemäß Figur 5 gezeigt. Sich dabei entsprechende Elemente sind mit den entsprechenden Bezugszeichen gekennzeichnet.

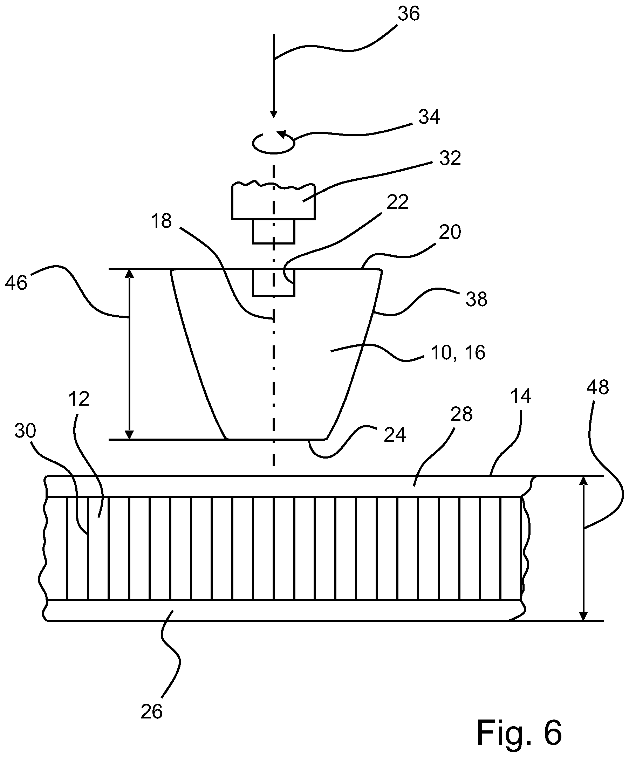

Aus dem Stand der Technik sind in Figur 6 schematisch gezeigte, auch als thermischer Stoffschlussdom bezeichnete, Verbindungselemente 10 bekannt geworden, welche zum Einbringen in ein Hohlräume 12 aufweisendes, plattenförmiges Hohlkammerbauteil 14 unter Druck- und Rotationsbeaufschlagung ausgebildet sind.

Die Verbindungselemente 10 sind im Wesentlichen rotationssymmetrisch ausgebildet und weisen einen Grundteil 16 auf, welcher einen thermoplastischen Kunststoff umfasst. Die Verbindungselemente 10 weisen ferner eine Längsachse 18 auf und sind zur Rotation um die Längsachse 18 ausgebildet. Die Verbindungselemente 10 weisen eine Oberseite 20 mit einer Werkzeugansetzstelle 22 zur Übertragung von Drehmoment, sowie eine der Oberseite 20 abgewandte Unterseite 24 auf.

Insbesondere im Flugzeugbau werden solche Verbindungselemente 10 verwendet, um diese in eines oder mehrere der in Figur 6 gezeigten Hohlkammerbauteile 14 einzubringen. Wie in Figur 6 deutlich erkennbar ist, umfassen die Hohlkammerbauteile 14 üblicherweise eine Grundschicht 26, eine Deckschicht 28, sowie eine zwischen Grundschicht 26 und Deckschicht 28 angeordnete Wabenstruktur 30. Die Grundschicht 26 und die Deckschicht 28 sind vorteilhafterweise aus in Epoxidharz getränkten Glasfasermatten hergestellt, wobei die Wabenstruktur 30 aus in Phenolharz getränktem Aramidfasern oder Papier hergestellt ist.

Zum Einbringen in ein Hohlkammerbauteil 14 wird das Verbindungselement 10 mittels eines Werkzeugs 32 an der Werkzeugansetzstelle 22 rotierend in Richtung des Pfeils 34 angetrieben und mit einer entlang der Längsachse 18 in Richtung des Hohlkammerbauteils 14, d.h. in Richtung des Pfeils 36, wirkenden Axialkraft beaufschlagt. Die Werkzeugansetzstelle 22 der in den Figuren 1 bis 5 gezeigten Verbindungselemente 10 umfasst, wie in Figur 5 deutlich zu erkennen ist, drei exzentrisch angeordnete Sacklochbohrungen 33.

Beim Einbringen der in Figur 6 gezeigten, aus dem Stand der Technik bekannten Verbindungselemente 10 hat sich gezeigt, dass deren Befestigung in den Hohlkammerbauteilen 14 teilweise nicht ausreichend ist, so dass sich die Verbindungselemente 10 teilweise wieder aus Hohlkammerbauteilen 14 gelöst haben.

Daher weisen die in den Figuren 1 bis 5 gezeigten erfindungsgemäßen Verbindungselemente 10 an einer sich zwischen der Oberseite 20 und der Unterseite 24 erstreckenden Umfangsfläche 38 am Grundteil 16 einen Expandierabschnitt 40 aus einem thermisch aktivierbaren, expandierfähigen Material auf. Hierzu ist im Grundteil 16 eine im Bereich des der Oberseite 20 zugewandten oberen Viertels eine umlaufende Nut 42 vorgesehen, in welcher der Expandierabschnitt 40 angeordnet ist, so dass eine Oberfläche 44 des Expandierabschnitts 40 im Auslieferungszustand bündig mit der Umfangsfläche 38 des Grundteils 16 ist.

Das thermisch aktivierbare, expandierfähige Material ist zur Ausdehnung unter Wärmeeinwirkung ausgebildet. Das thermisch aktivierbare Material ist ein thermoplastischer Kunststoff, der ein thermisch aktivierbares Treibmittel umfasst. Dabei ist es denkbar, dass das Treibmittel bei Erhitzung sublimiert. Der thermoplastische Kunststoff des Grundteils 16 ist Polyamid (Polyamid 6, Polyamid 66 oder Polyamid 666) oder Polypropylen. Dabei ist es ist denkbar, dass der Grundteil 16 vollständig aus dem thermoplastischen Kunststoff besteht. Es ist jedoch auch denkbar, dass der Grundteil 16 aus thermoplastischem Kunststoff zusammen mit einem entsprechenden Anteil an Glasfasern besteht.

Beim Einbringen in ein Hohlkammerbauteil 14 kann sich das thermisch aktivierbare, expandierfähige Material des Expandierabschnitts 40 aufgrund von durch Reibung zwischen dem Verbindungselement 10 und dem Hohlkammerbauteil 14 erzeugter Wärme in Hohlräume 12 der Wabenstruktur 30 des Hohlkammerbauteils 14 ausdehnen, so dass unterhalb der Deckschicht 28 des Hohlkammerbauteils 14 ein zusätzlicher Hinterschnitt erzeugt werden kann, durch den das Verbindungselement 10 sicher im Hohlkammerbauteil 14 befestigt werden kann. Beim Einbringen in das Hohlkammerbauteil 14 wird das Verbindungsmittel 10 durch das Werkzeug 32 mit einer Axialkraft im Bereich von etwa 800 N bis etwa 1.200 N, vorzugsweise von etwa 1.000 N beaufschlagt und mit einer Rotationsgeschwindigkeit im Bereich von etwa 4.000 U/min bis etwa 6.000 U/min, vorzugsweise von etwa 5.000 U/min angetrieben.

Die in den Figuren 1 bis 5 gezeigten Verbindungselemente weisen in Richtung der Längsachse 18 eine Länge 46 (aus Übersichtlichkeitsgründen in Figur 6 gekennzeichnet) auf, die derart gewählt ist, dass ein in ein Hohlkammerbauteil 14 eingebrachtes Verbindungselement 10 das Hohlkammerbauteil 14 vollständig durchdringt. Da es beim Einbringen des Verbindungselements 10 in ein Hohlkammerbauteil 14 zum teilweisen Aufschmelzen des Verbindungselements 10 kommt, ist die ursprüngliche Länge 46 des Verbindungselements 10 in etwa 30 % größer als eine Dicke 48 des Hohlkammerbauteils 14.

Aus prozesstechnischen Gründen weisen die in den Figuren 1 bis 4 gezeigten Verbindungselemente an einem Übergangsbereich zwischen der Unterseite 24 und der Umfangsfläche 38 einen Radius 50 im Bereich von 1 mm bis 2 mm auf.

Das in Figur 1 gezeigte Verbindungselement 10 weist im Grundteil 16 lediglich eine konzentrisch zur Längsachse 18 angeordnete Durchgangsbohrung 52 auf.

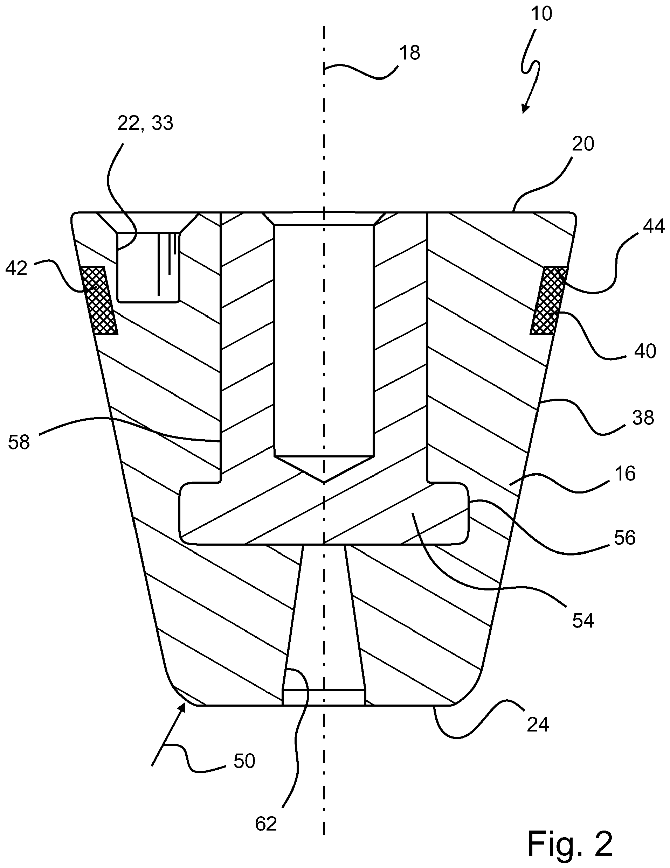

Die in den Figuren 2 bis 4 gezeigten Verbindungselemente weisen eine metallische Hülse 54 auf, die im Grundteil 16 konzentrisch zur Längsachse 18 angeordnet ist und mit dem thermoplastischen Kunststoff des Grundteils 16 zumindest teilweise umspritzt ist. Im vorliegenden Fall ist die metallische Hülse 54 aus Aluminium hergestellt. Es ist jedoch auch denkbar, dass die metallische Hülse 54 aus Edelstahl hergestellt ist.

Zur Verdrehsicherung gegenüber dem thermoplastischen Kunststoff des Grundteils 16 weist die in Figur 2 gezeigte metallische Hülse 54 einen Vierkant- oder Sechskantkopf 56 auf. Es ist jedoch auch denkbar, dass an der Oberfläche 58 der Hülse 54 ein Rändel, eine Verrippung und/oder Verrillung vorgesehen ist.

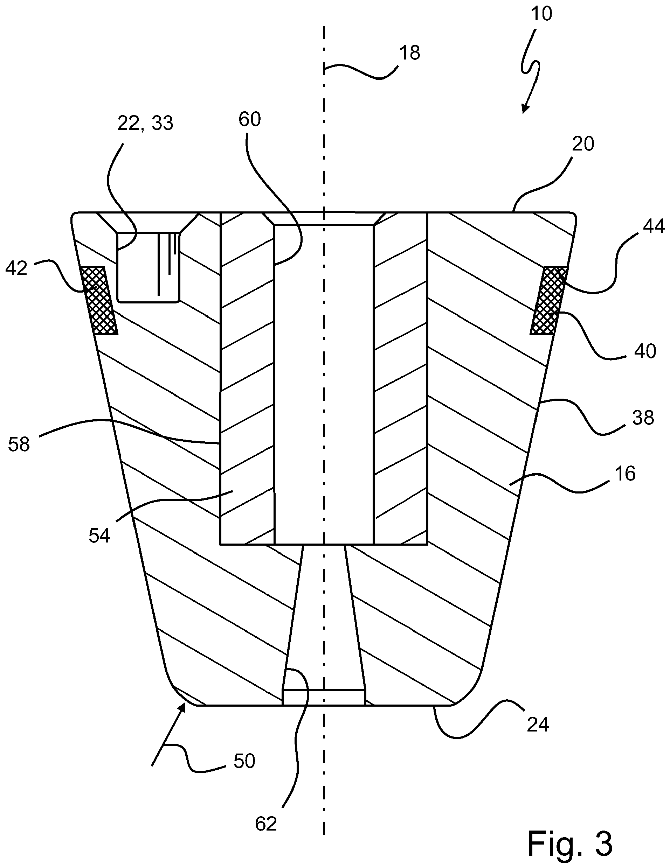

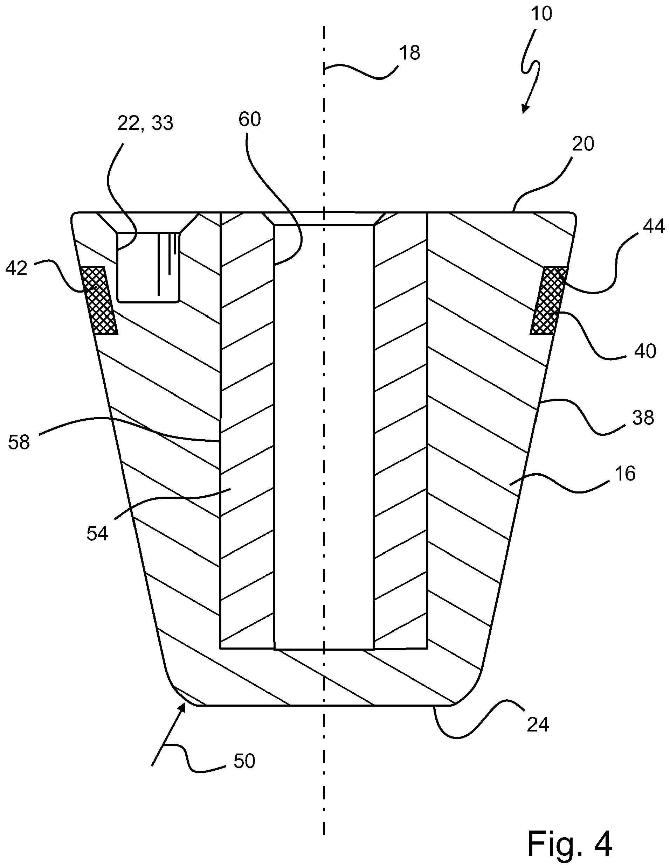

Die in den Figuren 3 und 4 gezeigten metallischen Hülsen 54 weisen eine durch Plasmanitrieren plasmabehandelte Oberfläche 58 auf. Somit kann die Anhaftung des thermoplastischen Kunststoffs an der metallischen Hülse 54 verbessert werden. Die metallischen Hülsen 54 der in den Figuren 3 und 4 gezeigten Verbindungselemente weisen ferner eine kreiszylindrische Öffnung bzw. Bohrung 60 auf, so dass bei in ein Hohlkammerbauteil 14 eingebrachtem Verbindungselement 10 Kabel durch die Öffnung bzw. Bohrung 60 hindurchgeführt werden können.

Der Grundteil 16 der in Figur 2 und 3 gezeigten Verbindungselemente 10 weist eine konzentrisch zur Längsachse 18 des Verbindungselements 10 angeordnete Öffnung 62 auf. Bei dem in Figur 4 gezeigten Verbindungselement 10 ist die metallische Hülse 54 im Bereich der Unterseite 24 vom Grundteil 16 verschlossen. Wenn die metallische Hülse 54 im Bereich der Unterseite 24 vom Grundteil 16 verschlossen ist, muss die Unterseite 24 des Grundteils 16 beim Einbringen in ein Hohlkammerbauteil 14 von dem das Verbindungselement 10 antreibenden Werkzeug 32 durchstoßen werden, so dass eine das Verbindungselement 10 entlang der Längsachse 18 von der Oberseite 20 zur Unterseite 24 durchsetzende Öffnung erzeugt wird. Entsprechend können dann durch die metallische Hülse 54 Kabel durch ein Hohlkammerbauteil 14 hindurchgeführt werden.

Insgesamt kann eine kostengünstige Möglichkeit zur dauerhaft sicheren Befestigung eines Verbindungselements 10 in einem Hohlkammerbauteil 14 geschaffen werden.

## Patentansprüche

1. Verbindungselement (10), insbesondere thermischer Stoffschlussdom, zum Einbringen in wenigstens ein Bauteil, insbesondere in ein Hohlräume (12) aufweisendes, insbesondere plattenförmiges Hohlkammerbauteil (14), unter Druck- und Rotationsbeaufschlagung, mit einem Grundteil (16), welcher einen thermoplastischen Kunststoff umfasst, wobei das Verbindungselement (10) eine Längsachse (18) aufweist und zur Rotation um die Längsachse (18) ausgebildet ist, wobei das Verbindungselement (10) eine Oberseite (20) mit einer Werkzeugansetzstelle (22), sowie eine der Oberseite (20) abgewandte Unterseite (24) aufweist, **dadurch gekennzeichnet, dass** das Verbindungselement (10) an einer sich zwischen der Oberseite (20) und der Unterseite (24) erstreckenden Umfangsfläche (38) am Grundteil (16) einen Expandierabschnitt (40) aus einem thermisch aktivierbaren, expandierfähigen Material aufweist.

2. Verbindungselement (10) nach Anspruch 1, wobei im Grundteil (16) eine Nut (42) vorgesehen ist, in welcher der Expandierabschnitt (40) angeordnet ist.

3. Verbindungselement (10) nach Anspruch 1 oder 2, wobei das thermisch aktivierbare Material ein thermoplastischer Kunststoff ist, der ein Treibmittel umfasst.

4. Verbindungselement (10) nach wenigstens einem der vorherigen Ansprüche, wobei das thermisch aktivierbare, expandierfähige Material zur Ausdehnung unter Wärmeeinwirkung ausgebildet ist.

5. Verbindungselement (10) nach wenigstens einem der vorherigen Ansprüche, bei dem eine metallische Hülse (54) vorgesehen ist, die im Grundteil (16) und konzentrisch zur Längsachse (18) angeordnet ist.

6. Verbindungselement (10) nach Anspruch 5, wobei die metallische Hülse (54) aus Aluminium oder Edelstahl hergestellt ist.

7. Verbindungselement (10) nach Anspruch 5 oder 6, wobei die metallische Hülse (54) eine plasmabehandelte Oberfläche (58) aufweist und mit dem thermoplastischen Kunststoff des Grundteils (16) zumindest teilweise umspritzt ist.

8. Verbindungselement (10) nach wenigstens einem der Ansprüche 5 bis 7, wobei die metallische Hülse (54) im Bereich der Unterseite (24) vom Grundteil (16) verschlossen ist oder wobei der Grundteil (16) im Bereich der Unterseite (24) eine konzentrisch zur Längsachse (18) des Verbindungselements (10) angeordnete Öffnung (62) aufweist.

9. Verbindungselement (10) nach wenigstens einem der vorherigen Ansprüche, wobei der thermoplastische Kunststoff des Grundteils (16) Polyamid oder Polypropylen ist.

10. Verbindungselement (10) nach wenigstens einem der vorherigen Ansprüche, wobei das Verbindungselement (10) an einem Übergangsbereich zwischen der Unterseite (24) und der Umfangsfläche (38) einen Radius (50) im Bereich von 1 mm bis 2mm aufweist.

11. Verfahren zum Einbringen eines Verbindungselements (10) nach wenigstens einem der vorherigen Ansprüche in ein Hohlräume (12) aufweisendes, insbesondere plattenförmiges Hohlkammerbauteil (14), **gekennzeichnet durch** rotierendes Antreiben des Verbindungselements (10) um dessen Längsachse (18) und Aufbringen einer Axialkraft entlang der Längsachse (18) des Verbindungselements (10) in Richtung des Hohlkammerbauteils (14) mittels eines Werkzeugs (32), so dass sich das thermisch aktivierbare, expandierfähige Material aufgrund von durch Reibung zwischen dem Verbindungselement (10) und dem Hohlkammerbauteil (14) erzeugter Wärme, insbesondere in Hohlräume (12) des Hohlkammerbauteils (14), ausdehnt.

12. Verfahren nach Anspruch 11, wobei das Verbindungselement (10) derart in das Hohlkammerbauteil (14) eingebracht wird, dass es das Hohlkammerbauteil (14) nach dem Einbringen in Richtung der Längsachse (18) des Verbindungselements (10) vollständig durchdringt.

13. Verfahren nach Anspruch 11 oder 12, wobei das Verbindungselement (10) eine metallische Hülse (54) aufweist, die im Grundteil (16) und konzentrisch zur Längsachse (18) angeordnet ist, wobei Kabel nach dem Einbringen durch die Hülse (54) hindurchgeführt werden.

14. Verfahren nach wenigstens einem der Ansprüche 11 bis 13, wobei das Verbindungsmittel (10) durch das Werkzeug (32) mit einer Axialkraft im Bereich von etwa 800 N bis etwa 1.200 N, vorzugsweise von etwa 1.000 N beaufschlagt wird.

15. Verfahren nach wenigstens einem der Ansprüche 11 bis 14, wobei das Verbindungsmittel (10) durch das Werkzeug mit einer Rotationsgeschwindigkeit im Bereich von etwa 4.000 U/min bis etwa 6.000 U/min, vorzugsweise von etwa 5.000 U/min angetrieben wird.

## Claims

1. A connection element (10), in particular a thermal adhesive bonding boss, to be introduced into at least one component, in particular a hollow chamber component (14), in particular a plate-shaped hollow chamber component which has hollow chambers (12), under the effect of pressure and rotation, comprising a main part (16) which comprises a thermoplastic, the connection element (10) having a longitudinal axis (18) and being designed to rotate about the longitudinal axis (18), the connection element (10) having an upper face (20) with a tool placement point (22) and a lower face (24) which faces away from the upper face (20), **characterized in that** the connection element (10) has an expanding section (40) made of a thermally activatable expandable material on the main part (16) on a circumferential surface (38) extending between the upper face (20) and the lower face (24).

2. The connection element (10) according to claim 1, wherein a groove (42) in which the expanding section (40) is arranged is provided in the main part (16).

3. The connection element (10) according to claim 1 or 2, wherein the thermally activatable material is a thermoplastic which comprises a blowing agent.

4. The connection element (10) according to at least one of the preceding claims, wherein the thermally activatable, expandable material is designed to extend under the action of heat.

5. The connection element (10) according to at least one of the preceding claims, in which a metallic sleeve (54) is provided which is arranged in the main part (16) and concentrically with the longitudinal axis (18) .

6. The connection element (10) according to claim 5,
wherein the metallic sleeve (54) is made of aluminum or stainless steel.

7. The connection element (10) according to claim 5 or 6, wherein the metallic sleeve (54) has a plasma-treated surface (58) and is at least partially encapsulated by the thermoplastic of the main part (16).

8. The connection element (10) according to at least one of claims 5 to 7, wherein the metallic sleeve (54) is closed off by the main part (16) in the region of the lower face (24) or wherein the main part (16) has an opening (62) arranged concentrically with the longitudinal axis (18) of the connection element (10) in the region of the lower face (24).

9. The connection element (10) according to at least one of the preceding claims, wherein the thermoplastic of the main part (16) is polyamide or polypropylene.

10. The connection element (10) according to at least one of the preceding claims, wherein the connection element (10) has a radius (50) in the range of from 1 mm to 2 mm at a transition region between the lower face (24) and the circumferential surface (38).

11. A method for introducing a connection element (10) according to at least one of the preceding claims into a hollow chamber component (14), in particular a plate-shaped hollow chamber component which has hollow chambers (12), **characterized by** rotational driving of the connection element (10) about its longitudinal axis (18) and applying an axial force along the longitudinal axis (18) of the connection element (10) in the direction of the hollow chamber component (14) by means of a tool (32), so that the thermally activatable expandable material extends in particular into hollow chambers (12) of the hollow chamber component (14) due to heat generated by friction between the connection element (10) and the hollow chamber component (14).

12. The method according to claim 11, wherein the connection element (10) is introduced into the hollow chamber component (14) in such a way that it completely penetrates the hollow chamber component (14) after being introduced in the direction of the longitudinal axis (18) of the connection element (10).

13. The method according to claim 11 or 12, wherein the connection element (10) has a metallic sleeve (54) which is arranged in the main part (16) and concentrically with the longitudinal axis (18), wherein cables pass through the sleeve (54) after the introduction.

14. The method according to at least one of claims 11 to 13, wherein the connection means (10) is acted upon by the tool (32) with an axial force in the range of from approximately 800 N to approximately 1,200 N, preferably of approximately 1,000 N.

15. The method according to at least one of claims 11 to 14, wherein the connection means (10) is driven by the tool at a speed of rotation in the range of from approximately 4,000 rpm to approximately 6,000 rpm, preferably of approximately 5,000 rpm.

## Revendications

1. Élément de liaison (10), en particulier embout à liaison de matière thermique, destiné à être introduit dans au moins un composant, en particulier dans un composant à chambre creuse (14) présentant des cavités (12), en particulier en forme de plaque, par mise sous pression et en rotation, comportant une partie de base (16), laquelle comprend un matériau synthétique thermoplastique, dans lequel l'élément de liaison (10) présente un axe longitudinal (18) et est conçu pour tourner autour de l'axe longitudinal (18), dans lequel l'élément de liaison (10) présente une face supérieure (20) comportant un emplacement de montage d'outil (22) ainsi qu'une face inférieure (24) opposée à la face supérieure (20), **caractérisé en ce que** l'élément de liaison (10) présente, au niveau d'une surface circonférentielle (38) s'étendant entre la face supérieure (20) et la face inférieure (24) au niveau de la partie de base (16), une section d'expansion (40) en un matériau expansible pouvant être activé par voie thermique.

2. Élément de liaison (10) selon la revendication 1, dans lequel une rainure (42) est prévue dans la partie de base (16), dans laquelle rainure la section d'expansion (40) est disposée.

3. Élément de liaison (10) selon la revendication 1 ou 2, dans lequel le matériau pouvant être activé par voie thermique est un matériau synthétique thermoplastique qui comprend un agent propulseur.

4. Élément de liaison (10) selon au moins l'une des revendications précédentes, dans lequel le matériau expansible pouvant être activé par voie thermique est conçu pour se dilater sous l'effet de la chaleur.

5. Élément de liaison (10) selon au moins l'une des revendications précédentes, dans lequel un manchon (54) métallique est prévu, lequel est disposé dans la partie de base (16) et de manière concentrique par rapport à l'axe longitudinal (18).

6. Élément de liaison (10) selon la revendication 5, dans lequel le manchon (54) métallique est fabriqué en aluminium ou en acier inoxydable.

7. Élément de liaison (10) selon la revendication 5 ou 6, dans lequel le manchon (54) métallique présente une surface traitée au plasma (58) et est au moins partiellement surmoulé avec le matériau synthétique thermoplastique de la partie de base (16).

8. Élément de liaison (10) selon au moins l'une des revendications 5 à 7, dans lequel le manchon (54) métallique est fermé par la partie de base (16) dans la zone de la face inférieure (24) ou dans lequel la partie de base (16) présente, dans la zone de la face inférieure (24), une ouverture (62) disposée de manière concentrique par rapport à l'axe longitudinal (18) de l'élément de liaison (10).

9. Élément de liaison (10) selon au moins l'une des revendications précédentes, dans lequel le matériau synthétique thermoplastique de la partie de base (16) est du polyamide ou du polypropylène.

10. Élément de liaison (10) selon au moins l'une des revendications précédentes, dans lequel l'élément de liaison (10) présente un rayon (50) dans la plage allant de 1 mm à 2 mm au niveau d'une zone de transition entre la face inférieure (24) et la surface circonférentielle (38).

11. Procédé permettant d'introduire un élément de liaison (10) selon au moins l'une des revendications précédentes dans un composant à chambre creuse (14) présentant des cavités (12), en particulier en forme de plaque, **caractérisé par** l'entraînement en rotation de l'élément de liaison (10) autour de son axe longitudinal (18) et l'application d'une force axiale le long de l'axe longitudinal (18) de l'élément de liaison (10) en direction du composant à chambre creuse (14) au moyen d'un outil (32), de sorte que le matériau expansible pouvant être activé par voie thermique se dilate en raison de la chaleur produite par le frottement entre l'élément de liaison (10) et le composant à chambre creuse (14), en particulier dans des cavités (12) du composant à chambre creuse (14).

12. Procédé selon la revendication 11, dans lequel l'élément de liaison (10) est introduit dans le composant à chambre creuse (14) de manière telle qu'il pénètre entièrement dans le composant à chambre creuse (14) après l'introduction en direction de l'axe longitudinal (18) de l'élément de liaison (10).

13. Procédé selon la revendication 11 ou 12, dans lequel l'élément de liaison (10) présente un manchon (54) métallique qui est disposé dans la partie de base (16) et de manière concentrique par rapport à l'axe longitudinal (18), dans lequel des câbles sont passés à travers le manchon (54) après l'introduction.

14. Procédé selon au moins l'une des revendications 11 à 13, dans lequel le moyen de liaison (10) est soumis par l'outil (32) à une force axiale dans la plage allant d'environ 800 N à environ 1.200 N, de préférence étant d'environ 1.000 N.

15. Procédé selon au moins l'une des revendications 11 à 14, dans lequel le moyen de liaison (10) est entraîné par l'outil à une vitesse de rotation dans la plage allant d'environ 4.000 tr/min à environ 6.000 tr/min, de préférence étant d'environ 5.000 tr/min.
